# EUROPEAN PATENT SPECIFICATION

(11) **EP 1 739 545 B1**
(45) Date of publication and mention of the grant of the patent: **13.04.2016**
(21) Application number: 06116242.6
(22) Date of filing: 28.06.2006
(51) Int. Cl.: G09G 5/00

(54) **Detecting cable connection states**
Erkennung von Kabelanschlusszuständen
Détection d'états de connexion d'un câble

(30) Priority: 29.06.2005 KR 2005057151
(43) Date of publication of application: 03.01.2007
(73) Proprietor: Samsung Electronics Co., Ltd, Gyeonggi-do 16677 (KR)
(72) Inventor: Lee, In-hye, Gyeonggi-do (KR); Kim, Young-chan, Ulwang-si, Gyeonggi-do (KR)
(74) Representative: Walaski, Jan Filip

(56) References cited:
- US-A- 6 069 619
- US-A1- 2002 060 676
- US-A1- 2004 027 515
- US-E1- R E38 537

## Description

The present invention relates to detecting the connection state of a cable, particularly, but not exclusively, to providing information about the connection state of a video cable for connecting a display apparatus to an external video source, such as a computer.

Generally, a display apparatus displays an image on a screen based on a video signal supplied from an external video source such as a computer. Here, the display apparatus and the computer are connected through a video cable.

However, a connector of the video cable connecting between the display apparatus and the computer may be not properly connected or may be disconnected from the computer or the display apparatus. In this case, the image is not displayed on the screen of the display apparatus.

However, a user of the display apparatus may incorrectly decide that the display apparatus has a problem when the image is not displayed as a result of disconnection of the video cable as described above.

U.S. Patent No. RE 38,537 discloses a controller sensing whether a display apparatus and a computer are normally connected. That is, in a state that the display apparatus and the computer are normally connected, a pin (P1) which is connected to a SYNC GND terminal of a connector and allocated in a microprocessor of the display apparatus, is grounded at a ground of the computer, thereby becoming a 'low' state, and in a case that the connector is released or disconnected, power connected through a pull up resistance (R1) is applied to the pin (P1), thereby becoming a 'high' state. Accordingly, the controller senses that the display apparatus and the computer are normally connected, according to the 'high' state. A similar circuit is shown in U.S. Patent No. 6,069,619.

Recently, a two-way video connector which comprises a first cable connector for connecting the video cable connecting between the computer and the display apparatus to the computer, and a second cable connector for connecting the video cable to the display apparatus, has been used. However, a connection state of the first cable connector and the second cable connector cannot be detected.

The present invention provides a display apparatus capable of supplying information about a connecting state of a first cable connector and a second cable connector of a video cable connecting the display apparatus and an external video source.

Additional aspects and advantages of the present invention will be set forth in part in the description which follows and, in part, will be obvious from the description, or may be learned by practice of the invention.

The foregoing and other aspects of the present invention may be achieved by providing a display apparatus according to the appended claims.

In one embodiment, the display apparatus is connected with an external video source through a video cable having a first cable connector and a second connector connected to the external video source, the display apparatus comprising a display connector having a plurality of signal pins to which the first cable connector is connected, a connecting sensor connected at least two or more the plurality of signal pins to output a first connecting sense signal to inform a first connecting state between the first cable connector and the display connector, and a second connecting sense signal to inform a second connecting state between the second cable connector and the external video source, and a controller to output information about a third connecting state between the first cable connector and the second cable connector based on the first and the second connecting sense signals from the connecting sensor.

The signal pins of the display connector may comprise a first signal pin released from a first ground when the first cable connector and the display connector is disconnected, and a second signal pin released from a second ground when the second cable connector and the external video source is disconnected.

The connecting sensor may comprise a first ground detector connected with the first signal pin to output the first connecting sense signal as a first logic value corresponding to whether the first signal pin is grounded, and a second ground detector connected with the second signal pin to output the second connecting sense signal as a second logic value corresponding to whether the second signal pin is grounded.

The signal pins of the display connector may further comprise a third signal pin grounded at a third ground provided in the display apparatus, and the first signal pin is grounded and connected to the third signal pin through the video cable in a state that the first cable connector is connected to the display connector.

The second signal pin may be grounded at the second ground provided in the external video source in a state that the first cable connector and the second cable connector are respectively connected to the display connector and the external video source.

The display apparatus may further comprise signal lines of the video cable which are respectively connected to the first signal pin and the second signal pin and independently grounded each other.

The display apparatus may further comprise a connecting state display part on which information about the connecting state of the first cable connector and the second cable connector is displayed by the controller.

The connecting state display part may comprise a display part on which the information about the connecting state of the first cable connecter and the second cable connecter is displayed as an image.

The first cable connector, the second cable connector, and the display connector have a D-sub connector connecting structure; and the second signal pin of the display connector may be a SYNC ground pin.

The above and other features and advantages of the present invention will become more apparent by describing in detail exemplary embodiments thereof with reference to the attached drawings in which:
Figure 1 illustrates connection arrangements for a display apparatus and a computer according to an embodiment of the present invention;
Figure 2 illustrates a connecting structure of a connector of the display apparatus of Figure 1;
Figure 3 illustrates a connecting state of the connector according to a pin state of a controller of the display apparatus of Figure 2; and
Figures 4A and 4B illustrate an error message to be displayed on the display apparatus of Figures 1 and 2.

Reference will now be made in detail to the embodiments of the present invention, examples of which are illustrated in the accompanying drawings, wherein like reference numerals refer to like elements throughout. The embodiments are described below so as to explain the present invention by referring to the figures.

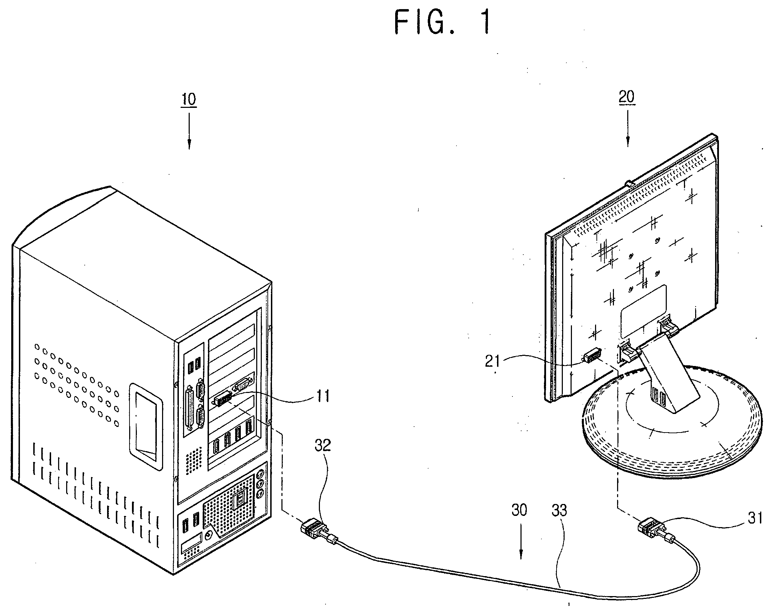

Referring to Figure 1, a display apparatus 20 according to an embodiment of the present invention is connected with an external video source (for example, a computer 10) through a video cable 30.

The video cable 30 includes a first cable connector 31 connecting to a display connector 21 provided in the display apparatus 20, a second cable connector 32 connected to a main body connector 11 provided in the computer 10, and a signal line part 33 connecting the first cable connector 31 and the second cable connector 32.

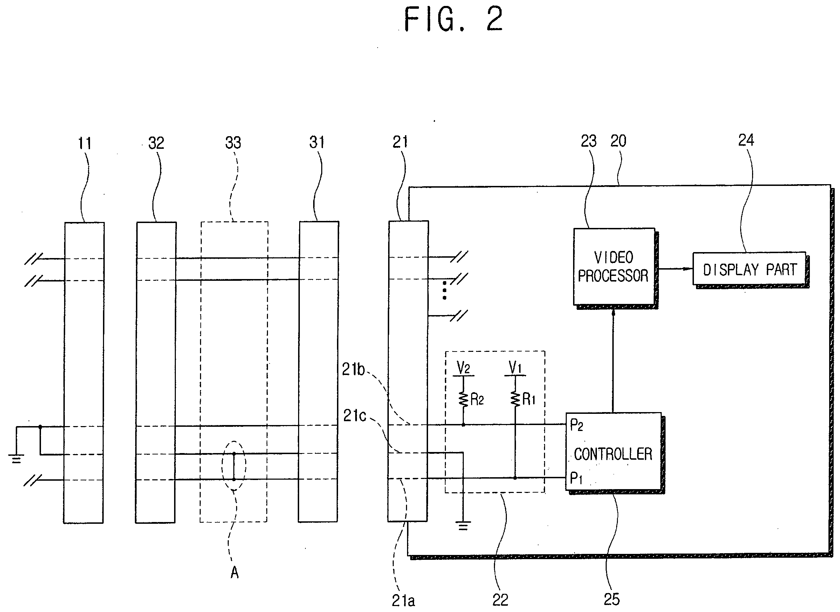

Referring to Figure 2, the display apparatus 20 according to the present embodiment includes a display part 24 on which an image is displayed, the display connector 21 to which the first cable connector 31 of the video cable 30 is connected so as to receive the video signal, a video processor 23 to convert the video signal received through the video cable 30 and the display connector 21 into a signal which is formatted so as to allow the display part 24 to display and applying the signal to the display part 24, and a controller 25 to control the display part 24, the display connector 21, and the video processor 23.

A D-Sub connector connecting structure may be used as the main body connector 11, the first cable connector 31, the second cable connector 32 and the display connector 21 according to the present embodiment.

The display connector 21 includes a plurality of signal pins connected with the first cable connector 31. For example, with the connecting structure of the D-Sub connector, the signal pins of the first cable connector 31 may include a signal pin for an R, G, and B video signal, a signal pin for a horizontal and vertical synchronous signal, a ground pin, and extra pins.

The display apparatus 20 according to the present embodiment includes a connecting sensor 22 connected to two or more of the plurality of signal pins of the first cable connector 31 to output a first connecting sense signal to inform a user of a first connecting state between the first cable connector 31 and the display connector 21, and a second connecting sense signal to inform the user of a second connecting state between the second cable connector 32 and the main body connector 11 of the computer 10.

The controller 25 senses a third connecting state of the first cable connector 31 and the second cable connector 32 based on the first and the second connecting sense signals from the connecting sensor 22. The third connection state may include at least one of the first and second connecting states.

Referring to Figure 2, the signal pins of the display connector 21 include a first signal pin 21a released (or disconnected) from a first ground when the first cable connector 31 and the display connector 21 are released (or disconnected), and a second signal pin 21b released (or disconnected) from a second ground when the second cable connector 32 and the main body connector 11 of the computer 10 are released (or disconnected).

The second signal pin 21b is grounded at the second ground provided in the computer 10 in a state that the first cable connector 31 and the second cable connector 32 are respectively connected to the display connector 21 and the main body connector 11 of the computer 10.

The first signal pin 21a is grounded at the first ground provided in the display apparatus 20 though a third signal pin 21c of the display connector 21 in a state that the first cable connector 31 and the display connector 21 are connected. The second signal pin 21b is grounded at the second ground provided in the computer 10. Signal lines of the video cable 30 respectively connected to the first signal pin 21 a and the third signal pin 21c may be connected with each other by being grounded at the signal line part 33 of the video cable 30 in common (refer to a portion 'A' of Figure 2). Although the first signal pin 21a and the third signal pin 21c are electrically connected through the portion A of the signal lines of the video cable 30, the signal line having the portion A may not be connected to the second ground disposed in the computer 10. According to an embodiment of the present invention, the signal line having the portion A is connected to the second ground disposed in the computer 10. Accordingly, the first signal pin 21a may be grounded and connected with the third signal pin 21c through the video cable 30 in the state that the first cable connector 31 and the display connector 21 are connected. The first signal pin 21a is released (or disconnected) from the first ground when the first cable connector 31 and the display connector 21 are disconnected.

The signal lines of the video cable 30 respectively connected to the first signal pin 21a and the second signal pin 21b may be independently grounded, thereby preventing the first signal pin 21a and the second signal pin 21b from being grounded at the same ground in the video cable 30. The video cable 30 further includes other signal lines to transfer data and/or the video signal from the computer 10 to the display apparatus 20.

Meanwhile, the connecting sensor 22 includes a first ground detecting part connected with the first signal pin 21a of the display connector 21 to output the first connecting sense signal of the logic value corresponding to the ground of the first signal pin 21a, and a second ground detecting part connected with the second signal pin 21b to output the second connecting sense signal of the logic value corresponding to the ground of the second signal pin 21b.

The first ground detecting part according to the present embodiment may include a first pull-up resistance R1 branched (connected) from a line which connects between the first signal pin 21a and a first terminal P1 of the controller 25, and a first power supplying terminal V1 to supply power through the first pull-up resistance R1.

Therefore, in a state that the first signal pin 21a is grounded, the first terminal P1 of the controller 25 becomes a 'low' state (L), and in a state that the first signal pin 21 a is released (or is not grounded), the first terminal P1 is a 'high' state (H) since the power from the first power supplying terminal V1 is applied to the first pin P1 of the controller 25 through the first pull-up resistance R1.

And also, the second ground detecting part, according to the present embodiment may include a second pull-up resistance R2 branched (connected) from a line which connects between the second signal pin 21b and a second terminal P2 of the controller 25, and a second power supplying terminal V2 applying power through the second pull-up resistance R2. Therefore, in a state that the second signal pin 21b is grounded, the second terminal P2 of the controller 25 becomes a low state, and in a state that the ground of the second signal pin 21b is released (or the second signal pin 21b is not grounded), the second terminal P2 is a high state since the power from the second power supplying terminal V2 is applied to the second terminal P2 of the controller 25 through the second pull-up resistance R2.

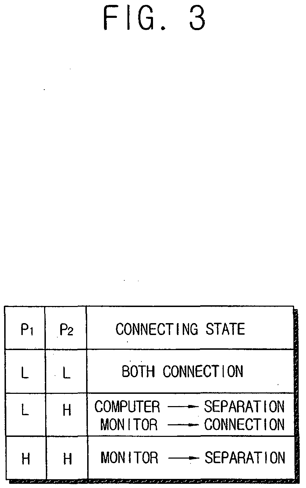

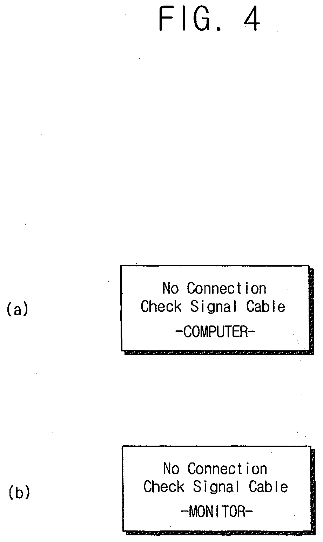

Hereinafter, a method that the controller 25 recognizes a ground state (or a connection state) of the first cable connector 31 and the second cable connector 32 according to the first terminal P1 and the second terminal P2 will be described with reference to Figures 3 and 4.

The controller 25 recognizes that the first cable connector 31 and the second cable connector 32 are normally connected to the display connector 21 and the main body connector 11 of the computer 10, respectively, when the controller 25 recognizes that both the first terminal P1 and the second terminal P2 are in the 'low' state. When the first cable connector 31 and the display connector 21 are normally connected, and the second cable connector 32 and the main body connector 11 of the computer 10 is not connected, the controller 25 recognizes that the first terminal P1 is the 'low' state and the second terminal P2 is the 'high' state. At this time, referring to Figure 4A, the controller 25 controls the video processor 23 to inform a user of a first error message representing that the connection of the second cable connector 32 is released or display the image corresponding to the first error message at the display part 24. The error message displayed at the display part 24 corresponds to an On Screen Display (OSD) image based on video data included in the video processor 23. Although the present embodiment describes that the controller 25 recognizes that the first terminal P1 is the 'low' state and the second terminal P2 is the 'high' state when the second cable connector 32 and the main body connector 11 of the computer 10 is not connected, the present invention is not limited thereto. That is, it is possible that the controller 25 recognizes that the first terminal P1 is the 'high' state and the second terminal P2 is the 'low' state according to an arrangement of circuit components of the display connector 21, the connecting sensor 22, and the signal part 33.

Further, when the connection of the first cable connector 31 and the display connector 21 is released, the controller 25 recognizes that both the first terminal P1 and the second terminal P2 are the 'high' state. At this time, referring to Figure 4B, the controller 25 controls the video processor 23 to inform the user of a second error message representing that the connection of the first cable connector 31 is released or display the image corresponding to the second error message at the display part 24. The first or second error message displayed at the display part 24 corresponds to an On Screen Display (OSD) based on the video data comprised in the video processor 23.

The foregoing embodiment illustrates that the controller 25 displays the image corresponding to the received video signal and/or representing the information about the connection state of the first cable connector 31 and the second cable connector 32 through the display part 24. Alternatively, the display apparatus 20 according to the present embodiment may comprise a respective connecting state display part on which the information about the connection state of the first cable connector 31 and/or the second cable connector 32 is displayed by controlling of the controller 25. For example, the connecting state display part may be an LED which is on and off according to the connection state of the first cable connector 31 and/or the second cable connector 32.

It will be apparent to those skilled in the art that various modifications and variation can be made in the present invention without departing from the scope of the inventionas defined in the appended claims.

## Claims

1. A system for detecting cable connection states, the system comprising a display apparatus (20) and a video cable (30), wherein the display apparatus is connectable to a video source (10) through the video cable (30), the video cable having a first cable connector (31) connectable to the apparatus and a second cable connector (32) connectable to the video source, and a plurality of signal lines, wherein two of the signal lines are connected together (A), the display apparatus (20) comprising:
a display connector (21) having a plurality of signal pins (21a-c) for connection to the first cable connector (31);
a connection sensor (22) connected to the signal pins for outputting: (i) a first connecting sense signal, representing a first connection state between the first cable connector (31) and the display connector (21) based on the signal lines that are connected together (A); and (ii) a second connecting sense signal representing a second connection state between the second cable connector (32) and the video source (10) when the first cable connector (31) and the display connector (21) are connected;
wherein the connection sensor (22) is arranged to determine the first connection state regardless of the second connection state; and
a controller (25) for outputting information about the connection state of the first cable connector and the second cable connector based on the first and the second connecting sense signals from the connecting sensor (22).

2. The system according to claim 1, wherein the signal pins of the display connector comprise:
a first signal pin (21 a) configured to be disconnected from a first ground when the first cable connector and the display connector are disconnected; and
a second signal pin (21b) configured to be disconnected from a second ground when the second cable connector and the video source are disconnected.

3. The system according to claim 2, wherein the connecting sensor (22) comprises:
a first ground detector connected with the first signal pin to output the first connecting sense signal as a first logic value corresponding to whether the first signal pin is grounded; and
a second ground detector connected with the second signal pin to output the second connecting sense signal as a second logic value corresponding to whether the second signal pin is grounded.

4. The system according to claim 3, wherein the signal pins of the display connector further comprise a third signal pin (21c) grounded at the first ground provided in the display apparatus, the first signal pin (21 a) being grounded and connected to the third signal pin through the video cable when the first cable connector is connected to the display connector.

5. The system according to claim 3, wherein the second signal pin (21b) is grounded at the second ground provided in the video source when the first cable connector and the second cable connector are respectively connected to the display connector and the video source.

6. The system according to claim 4 or 5, wherein the video cable comprises signal lines which are respectively connected to the first signal pin and the second signal pin and independently grounded.

7. The system according to any one of claims 2 to 6, wherein the first cable connector, the second cable connector, and the display connector have a D-sub connector connecting structure, and the second signal pin of the display connector is a SYNC ground pin.

8. The system according to any one of the preceding claims, further comprising:
a connection state display (24) to display the information about the connection states of the first cable connector and the second cable connector.

9. The system according to claim 8, wherein the connection state display comprises a display on which the information about the connection state of the first cable connecter and the second cable connecter is displayed as a video.

## Patentansprüche

1. System zum Erkennen von Kabelverbindungszuständen, wobei das System eine Anzeigevorrichtung (20) und ein Videokabel (30) umfasst, wobei die Anzeigevorrichtung über das Videokabel (30) mit einer Videoquelle (10) verbunden werden kann, wobei das Videokabel einen ersten Kabelverbinder (31), der mit der Vorrichtung verbunden werden kann und einen zweiten Kabelverbinder (32), der mit der Videoquelle verbunden werden kann und eine Vielzahl von Signalleitungen aufweist, wobei zwei der Signalleitungen miteinander verbunden sind (A), wobei die Anzeigevorrichtung (20) Folgendes umfasst:
einen Anzeigeverbinder (21), der eine Vielzahl von Signalstiften (21a-c) aufweist, zum Verbinden mit dem ersten Kabelverbinder (31);
einen Verbindungssensor (22), der mit den Signalstiften verbunden ist, um Folgendes auszugeben: (i) ein erstes Verbindungsabfühlsignal, das einen ersten Verbindungszustand zwischen dem ersten Kabelverbinder (31) und dem Anzeigeverbinder (21), basierend auf den miteinander verbundenen (A) Signalleitungen repräsentiert; und (ii) ein zweites Verbindungsabfühlsignal, das einen zweiten Verbindungszustand zwischen dem zweiten Kabelverbinder (32) und der Videoquelle (10) repräsentiert, wenn der erste Kabelverbinder (31) und der Anzeigeverbinder (21) verbunden sind;
wobei der Verbindungssensor (22) dazu angeordnet ist, den ersten Verbindungszustand ungeachtet des zweiten Verbindungszustands zu bestimmen; und
einen Kontroller (25) zum Ausgeben von Informationen über den Verbindungszustand des ersten Kabelverbinders und des zweiten Kabelverbinders, basierend auf dem ersten und dem zweiten Verbindungsabfühlsignal von dem Verbindungssensor (22).

2. System nach Anspruch 1, wobei die Signalstifte des Anzeigeverbinders Folgendes umfassen:
einen ersten Signalstift (21a), der dazu konfiguriert ist, von einer ersten Erde getrennt zu sein, wenn der erste Kabelverbinder und der Anzeigeverbinder getrennt sind; und
einen zweiten Signalstift (21b), der dazu konfiguriert ist, von einer zweiten Erde getrennt zu sein, wenn der zweite Kabelverbinder und die Videoquelle getrennt sind.

3. System nach Anspruch 2, wobei der Verbindungssensor (22) Folgendes umfasst:
einen ersten Erdungsdetektor, der mit dem ersten Signalstift verbunden ist, um das erste Verbindungsabfühlsignal als einen ersten Logikwert auszugeben, der dem entspricht, ob der erste Signalstift geerdet ist; und
einen zweiten Erdungsdetektor, der mit dem zweiten Signalstift verbunden ist, um das zweite Verbindungsabfühlsignal als einen zweiten Logikwert auszugeben, der dem entspricht, ob der zweite Signalstift geerdet ist.

4. System nach Anspruch 3, wobei die Signalstifte des Anzeigeverbinders weiter einen dritten Signalstift (21c) umfassen, der an der in der Anzeigevorrichtung vorgesehenen ersten Erde geerdet ist, wobei der erste Signalstift (21a) über das Videokabel geerdet und mit dem dritten Signalstift verbunden ist, wenn der erste Kabelverbinder mit dem Anzeigeverbinder verbunden ist.

5. System nach Anspruch 3, wobei der zweite Signalstift (21b) an der in der Videoquelle vorgesehenen zweiten Erde geerdet ist, wenn der erste Kabelverbinder und der zweite Kabelverbinder jeweils mit dem Anzeigeverbinder bzw. der Videoquelle verbunden sind.

6. System nach Anspruch 4 oder 5, wobei das Videokabel Signalleitungen umfasst, die jeweils mit dem ersten Signalstift bzw. dem zweiten Signalstift verbunden und unabhängig geerdet sind.

7. System nach einem der Ansprüche 2 bis 6, wobei der erste Kabelverbinder, der zweite Kabelverbinder und der Anzeigeverbinder eine D-Sub-Steckverbindungsstruktur aufweisen und es sich bei dem zweiten Signalstift des Anzeigeverbinders um einen SYNC-Erdungsstift handelt.

8. System nach einem der vorangehenden Ansprüche, das weiter Folgendes umfasst:
eine Verbindungszustandsanzeige (24) zum Anzeigen der Informationen über die Verbindungszustände des ersten Kabelverbinders und des zweiten Kabelverbinders.

9. System nach Anspruch 8, wobei die Verbindungszustandsanzeige eine Anzeige umfasst, auf der die Informationen über den Verbindungszustand des ersten Kabelverbinders und des zweiten Kabelverbinders als Video angezeigt werden.

## Revendications

1. Système de détection d'états de connexion d'un câble, le système comprenant un appareil d'affichage (20) et un câble vidéo (30), l'appareil d'affichage pouvant être connecté à une source vidéo (10) au moyen du câble vidéo (30), le câble vidéo possédant un premier connecteur de câble (31) qui peut être connecté à l'appareil et un deuxième connecteur de câble (32) qui peut être connecté à la source vidéo, et une pluralité de lignes de signal, deux desdites lignes de signal étant connectées l'une à l'autre (A), l'appareil d'affichage (20) comprenant :
un connecteur d'affichage (21) qui possède une pluralité de broches de signal (21a-c) pour la connexion au premier connecteur de câble (31) ;
un détecteur de connexion (22) connecté aux broches de signal pour délivrer en sortie : (i) un premier signal de détection de connexion qui représente un premier état de connexion entre le premier connecteur de câble (31) et le connecteur d'affichage (21) basé sur les lignes de signal qui sont connectées l'une à l'autre (A) ; et (ii) un deuxième signal de détection de connexion qui représente un deuxième état de connexion entre le deuxième connecteur de câble (32) et la source vidéo (10) lorsque le premier connecteur de câble (31) et le connecteur d'affichage (21) sont connectés ;
dans lequel le détecteur de connexion (22) est adapté pour déterminer le premier état de connexion quel que soit le deuxième état de connexion ; et
un contrôleur (25) pour délivrer en sortie une information concernant l'état de connexion de le premier connecteur de câble et le deuxième connecteur de câble basée sur les premier et deuxième signaux de détection de connexion provenant du détecteur de connexion (22).

2. Système selon la revendication 1, dans lequel les broches de signal du connecteur d'affichage comprennent :
une première broche de signal (21a) configurée pour être déconnectée d'une première masse lorsque le premier connecteur de câble et le connecteur d'affichage sont déconnectés ; et
une deuxième broche de signal (21b) configurée pour être déconnectée d'une deuxième masse lorsque le deuxième connecteur de câble et la source vidéo sont déconnectés.

3. Système selon la revendication 2, dans lequel le détecteur de connexion (22) comprend :
un premier détecteur de masse connecté à la première broche de signal pour délivrer en sortie le premier signal de détection de connexion sous la forme d'une première valeur logique correspondant à la mise à la masse de la première broche de signal ; et
un deuxième détecteur de masse connecté à la deuxième broche de signal pour délivrer en sortie le deuxième signal de détection de connexion sous la forme d'une deuxième valeur logique correspondant à la mise à la masse de la deuxième broche de signal.

4. Système selon la revendication 3, dans lequel les broches de signal du connecteur d'affichage comprennent en outre une troisième broche de signal (21c) mise à la masse au niveau de la première masse prédisposée dans l'appareil d'affichage, la première broche de signal (21a) étant mise à la masse et connectée à la troisième broche de signal par le biais du câble vidéo lorsque le premier connecteur de câble est connecté au connecteur d'affichage.

5. Système selon la revendication 3, dans lequel la deuxième broche de signal (21b) est mise à la masse au niveau de la deuxième masse prédisposée dans la source vidéo lorsque le premier connecteur de câble et le deuxième connecteur de câble sont respectivement connectés au connecteur d'affichage et à la source vidéo.

6. Système selon la revendication 4 ou la revendication 5, dans lequel le câble vidéo comprend des lignes de signal qui sont respectivement connectées à la première broche de signal et à la deuxième broche de signal et mises à la masse indépendamment.

7. Système selon l'une quelconque des revendications 2 à 6, dans lequel le premier connecteur de câble, le deuxième connecteur de câble et le connecteur d'affichage possèdent une structure de connexion à connecteurs D-sub et la deuxième broche de signal du connecteur d'affichage est une broche de masse SYNC.

8. Système selon l'une quelconque des revendications précédentes, comprenant en outre :
un afficheur d'états de connexion (24) pour afficher les informations concernant les états de connexion du premier connecteur de câble et du deuxième connecteur de câble.

9. Système selon la revendication 8, dans lequel l'afficheur d'états de connexion comprend un afficheur sur lequel les informations concernant les états de connexion du premier connecteur de câble et du deuxième connecteur de câble sont affichées sous la forme d'une vidéo.
